(19) Europäisches Patentamt
European Patent Office
Office européen des brevets

(11) Veröffentlichungsnummer: **0 485 441 B1**

(12) # EUROPÄISCHE PATENTSCHRIFT

(45) Veröffentlichungstag der Patentschrift: **07.09.94**

(51) Int. Cl.⁵: **C09B 67/22**, C09B 5/62, C09B 67/20, C08K 13/06

(21) Anmeldenummer: **90911612.1**

(22) Anmeldetag: **09.08.90**

(86) Internationale Anmeldenummer: **PCT/EP90/01311**

(87) Internationale Veröffentlichungsnummer: **WO 91/02034 (21.02.91 91/05)**

(54) **NEUE PIGMENTZUBEREITUNGEN AUF BASIS VON PERYLENVERBINDUNGEN.**

(30) Priorität: **11.08.89 DE 3926564**

(43) Veröffentlichungstag der Anmeldung: **20.05.92 Patentblatt 92/21**

(45) Bekanntmachung des Hinweises auf die Patenterteilung: **07.09.94 Patentblatt 94/36**

(84) Benannte Vertragsstaaten: **CH DE FR GB IT LI**

(56) Entgegenhaltungen:
**EP-A- 0 254 681**
**EP-A- 0 283 436**
**DE-A- 3 703 513**
**GB-A- 2 071 683**
**US-A- 4 762 569**

(73) Patentinhaber: **HOECHST AKTIENGESELLSCHAFT**
**D-65926 Frankfurt (DE)**

(72) Erfinder: **DIETZ, Erwin**
**St.-Matthäus-Strasse 7**
**D-6233 Kelkheim (DE)**
Erfinder: **URBAN, Manfred**
**Steigerwaldstrasse 2a**
**D-6200 Wiesbaden (DE)**

**EP 0 485 441 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue, wertvolle Pigmentzubereitungen auf Basis von Perylenverbindungen mit verbesserten coloristischen und rheologischen Eigenschaften, ein Verfahren zu ihrer Herstellung sowie deren Verwendung zum Pigmentieren von hochmolekularen organischen Materialien.

Bei der Dispergierung von Pigmenten in hochmolekularen Materialien, insbesondere hochwertigen Lacken, können eine Vielzahl von anwendungstechnischen Problemen auftreten. Im Falle von stark agglomerierenden und schwer dispergierbaren Pigmenten bleibt beispielsweise die Dispergierung meistens unvollständig, und die optimale Feinheit und Farbstärke werden nicht erreicht. Aufgrund solcher Unzulänglichkeiten gibt es daher eine Reihe von Vorschlägen zur Verbesserung des rheologischen Verhaltens von Pigmenten, die jedoch nicht immer zum erhofften Resultat führen.

So ist es aus der DE-OS 31 06 906 bekannt, daß sich durch Kombination von Pigmenten verschiedener organischer Verbindungsklassen mit strukturell analogen Pigmentderivaten, die durch Einführung eines oder mehrerer Sulfonamidreste in das zugrundeliegende Molekül substituiert wurden, Pigmentzubereitungen mit hervorragenden coloristischen Eigenschaften erhalten lassen. Die dort u.a. als Beispiel herausgestellte Präparation vom Perylentyp auf Basis von C.I. Pigment Red 179 besitzt bezüglich der gestiegenen Anforderungen der Praxis allerdings noch erhebliche coloristische und rheologische Mängel.

In der DE-AS 29 05 114 sind wiederum Pigmentzubereitungen aus der Kategorie von Perylenverbindungen erläutert, die durch Vermischen solcher Pigmente mit entsprechenden Derivaten hergestellt werden, in denen zusätzlich ein Phthalimidomethylenrest vorhanden ist. Das dadurch erzielte coloristische Ergebnis dieser Variation blieb weiterhin unbefriedigend, insbesondere hinsichtlich des dunklen und trüben Farbtons.

Die publizierte JP-PA 62-197461 (1987) beschreibt schließlich die Erzeugung von Zubereitungen auf Basis von Perylenpigmenten durch Zufügen eines Pigmentdispergators, der durch Umsetzung von Perylentetracarbonsäure-dianhydrid mit N-Dialkylamino-alkylaminen erhältlich ist. Unter Zuhilfenahme dieser Pigmentdispergatoren können indessen auch nur geringfügige rheologische Verbesserungen erreicht werden.

Aus der Sicht der eingangs diskutierten Erfahrungen bestand die Aufgabe für die nachfolgend definierte Erfindung somit in der Weiterentwicklung von für ihren beabsichtigten Einsatzzweck ausgerichteten Pigmentzubereitungen vom Perylentyp.

In Lösung der gestellten Aufgabe wurde nun gefunden, daß man durch die Mitwirkung von Pigmentdispergatoren auf Basis sulfonierter und/oder carboxylierter Perylenverbindungen den damit hergestellten Zubereitungen von Perylenpigmenten ein gegenüber dem bisherigen Standard überlegene coloristisches und rheologisches Verhalten verleihen kann.

Gegenstand der Erfindung sind Pigmentzubereitungen, gekennzeichnet, durch einen Gehalt an

a) als Basispigment mindestens einer Perylenverbindung der allgemeinen Formel I

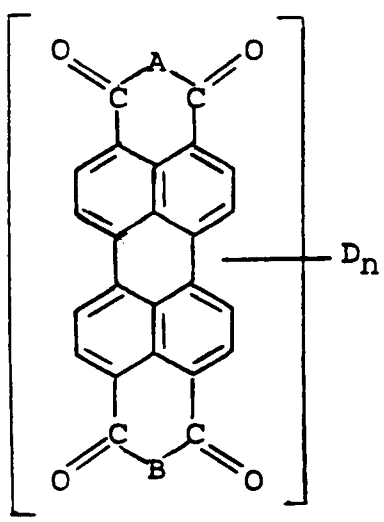

(I),

in welcher

- A einen bivalenten Rest -O- oder >$NR^1$ und
- B einen bivalenten Rest -O- oder >$NR^2$ bedeutet,
- D ein Chlor- oder Bromatom und sofern $n > 1$ ggf. eine Kombination davon darstellt, und

n eine Zahl von 0 bis 4 ist;

wobei in den obigen Resten A und B dann

$R^1$ und $R^2$ unabhängig voneinander jeweils für ein Wasserstoffatom oder eine $C_1$-$C_4$-Alkylgruppe oder für eine Phenylgruppe stehen, die unsubstituiert oder durch Halogen wie Chlor oder Brom, $C_1$-$C_4$-Alkyl wie Methyl oder Ethyl, $C_1$-$C_4$-Alkoxy wie Methoxy oder Ethoxy, oder Phenylazo ein- oder mehrfach substituiert sein kann;

und an

b) als Pigmentdispergator mindestens einer Perylenverbindung der allgemeinen Formel II

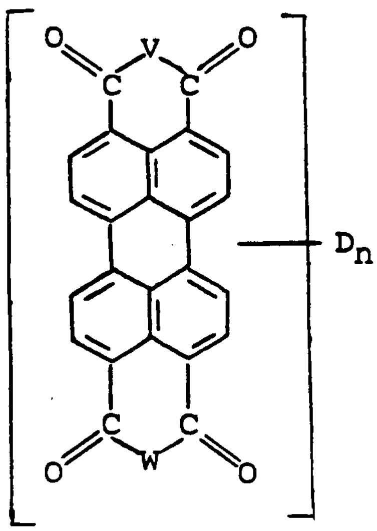

(II),

in welcher

V einen bivalenten Rest -O-, >$NR^3$ oder >$N$-$R^4$-$Y^-X^+$ und

W den bivalenten Rest >$N$-$R^4$-$Y^-X^+$ bedeutet,

D ein Chlor- oder Bromatom und sofern n > 1 ggf. eine Kombination davon darstellt, und

n eine Zahl von 0 bis 4 ist;

wobei in den obigen Resten V und W dann

$R^3$ für ein Wasserstoffatom oder eine $C_1$-$C_{18}$-Alkylgruppe, insbesondere $C_1$-$C_4$-Alkyl, oder für eine Phenylgruppe steht, die unsubstituiert oder durch Halogen wie Chlor oder Brom, $C_1$-$C_4$-Alkyl wie Methyl oder Ethyl, $C_1$-$C_4$-Alkoxy wie Methoxy oder Ethoxy, oder Phenylazo ein- oder mehrfach substituiert sein kann,

$R^4$ für eine $C_1$-$C_{18}$-Alkylengruppe steht, die innerhalb der C-C-Kette durch ein Brückenglied aus der Reihe -O-, -$NR^5$-, -S-, Phenylen, -CO-, -$SO_2$- oder -$CR^6R^7$- oder eine chemisch sinnvolle Kombination davon ein- oder mehrfach unterbrochen sein kann und in dem seinerseits die Bestandteile $R^5$, $R^6$ und $R^7$ unabhängig voneinander jeweils ein Wasserstoffatom oder eine $C_1$-$C_4$-Alkylgruppe sind, die unsubstituiert oder durch einen heterocyclischen Rest, vorzugsweise vom Imidazol- oder Piperazin-Typ, substituiert sein kann,

insbesondere aber eine geradkettige oder verzweigte $C_1$-$C_6$-Alkylengruppe wie Ethylen oder Propylen ist; oder für eine Phenylengruppe steht, die unsubstituiert oder durch $C_1$-$C_4$-Alkyl wie Methyl oder Ethyl, oder $C_1$-$C_4$-Alkoxy wie Methoxy oder Ethoxy ein- oder mehrfach substituiert sein kann,

$Y^-$ einen der anionischen Reste -$SO_3^-$ oder -$COO^-$ bedeutet, und

$X^+$ das Hydron $H^+$ oder das Äquivalent

$$\frac{M^{m+}}{m}$$

eines Metallkations aus der 1. bis 5. Hauptgruppe oder aus der 1. oder 2. oder der 4. bis 8. Nebengruppe des Periodensystems der chemischen Elemente (Chemikev-Kalender, 3 Auflage

1984) bezeichnet, wobei m eine der Zahlen 1, 2 oder 3 ist, wie z.B. $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$;
oder ein Ammoniumion $N^{+}R^{8}R^{9}R^{10}R^{11}$ definiert, wobei die Substituenten $R^8$, $R^9$, $R^{10}$ und $R^{11}$ am quartären N-Atom unabhängig voneinander jeweils ein Wasserstoffatom oder eine Gruppe aus der Reihe $C_1$-$C_{30}$-Alkyl, $C_1$-$C_{30}$-Alkenyl, $C_5$-$C_{30}$-Cycloalkyl, unsubstituiertes oder durch $C_1$-$C_8$-alkyliertes Phenyl oder eine (Poly)alkylenoxygruppe

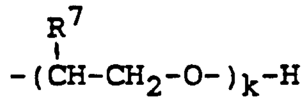

sind, in der $R^7$ für Wasserstoff oder $C_1$-$C_4$-Alkyl steht und k eine Zahl von 1 bis 30 ist und in denen ggf. als $R^8$, $R^9$, $R^{10}$ und/oder $R^{11}$ ausgewiesenes Alkyl, Alkenyl, Cycloalkyl, Phenyl oder Alkylphenyl außerdem durch Amino, Hydroxy und/oder Carboxy substituiert sein können;
oder wobei die Substituenten $R^8$ und $R^9$ zusammen mit dem quartären N-Atom ein fünf- bis siebengliedriges gesättigtes Ringsystem, das ggf. noch weitere Heteroatome wie ein O-, S- und/oder N-Atom enthält, bilden können, z.B. vom Pyrrolidon-, Imidazolidin-, Hexamethylenimin-, Piperidin-, Piperazin- oder Morpholin-Typ;
oder wobei die Substituenten $R^8$, $R^9$ und $R^{10}$ zusammen mit dem quartären N-Atom ein fünf- bis siebengliedriges aromatisches Ringsystem, das ggf. noch weitere Heteroatome wie ein O-, S- und/oder N-Atom enthält und an dem ggf. zusätzliche Ringe ankondensiert sind, bilden können, z.B. vom Pyrrol-, Imidazol-, Pyridin-, Picolin-, Pyrazin-, Chinolin- oder Isochinolin-Typ.

In diesem Zusammenhang sollen erfindungsgemäß vor allem Pigmentzubereitungen herausgestellt werden, worin als Basispigment a) mindestens eine Perylenverbindung der eingangs erläuterten allgemeinen Formel I vorliegt, in welcher

A einen bivalenten Rest -O- oder >$NR^1$ und
B einen bivalenten Rest -O- oder >$NR^2$ bedeutet sowie
D und n wie vorstehend angegeben definiert sind,

mit der Maßgabe, daß die jeweilige Bedeutung der obigen Reste A und B identisch ist, und wobei dann $R^1$ und $R^2$ übereinstimmend jeweils für ein Wasserstoffatom oder eine Gruppe aus der Reihe Methyl oder den Strukturen

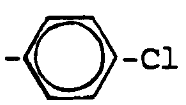 , 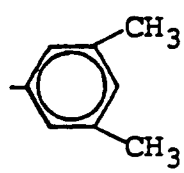 , 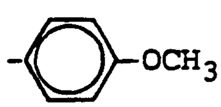 , 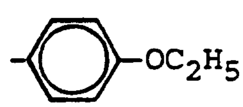

oder 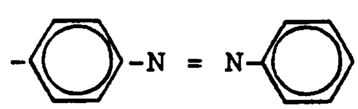

stehen.

Besonderes Interesse haben erfindungsgemäß Pigmentzubereitungen erlangt, worin als Pigmentdispergator b) mindestens eine Perylenverbindung der eingangs erläuterten allgemeinen Formel II vorliegt, in welcher

V einen bivalenten Rest -O-, >$NR^3$ oder >$N$-$R^4$-$Y^-X^+$ und
W den bivalenten Rest >$N$-$R^4$-$Y^-X^+$ bedeutet sowie
D und n wie vorstehend angegeben definiert sind,

wobei in den obigen Resten V und W dann

$R^3$ und $R^4$ die weiter oben ausgewiesene Bedeutung zukommt,
$Y^-$ einen der anionischen Reste $-SO_3^-$ oder $-COO^-$ darstellt, und
$X^+$ das Hydron $H^+$ oder das Äquivalent

$$\frac{M^{m+}}{m}$$

eines Metallkations der weiter oben individuell bezeichneten chemischen Elemente, oder ein Ammoniumion $N^+R^8R^9R^{10}R^{11}$ darstellt, in dem die Substituenten $R^8$, $R^9$ und $R^{10}$ am quartären N-Atom unabhängig voneinander jeweils ein Wasserstoffatom oder die Gruppe $C_2$-$C_3$-Hydroxyalkyl und $R^{11}$ eine der Gruppen aus der Reihe $C_1$-$C_{30}$-Alkyl, $C_1$-$C_{30}$-Alkenyl, $C_2$-$C_3$-Hydroxyalkyl oder $C_5$-$C_6$-Cycloalkyl sind.

Als besonders wertvoll werden nach der Erfindung Pigmentzubereitungen eingestuft, worin als Pigmentdispergator b) mindestens eine halogenfreie Perylenverbindung der eingangs erläuterten allgemeinen Formel II vorliegt, in welcher bei sonst gleicher Zuordnung der Bedeutung für die Reste V und W der Index n also die Zahl 0 ist,
wobei dann im Falle der Charakterisierung für die in Rede stehenden Reste V und W

$R^3$ jeweils die weiter oben ausgewiesene Bedeutung zukommt,

$R^4$ aber - sofern $Y^-$ den Rest $-SO_3^-$ bezeichnet - für eine Gruppe aus der Reihe Ethylen oder Propylen oder den Strukturen

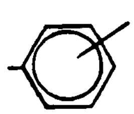 , 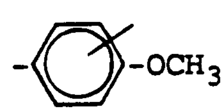 oder 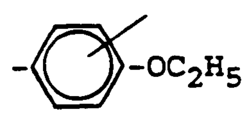

steht,
oder - sofern $Y^-$ den Rest $-COO^-$ bezeichnet - für eine Gruppe aus der Reihe $C_1$-$C_6$-Alkylen oder der Struktur

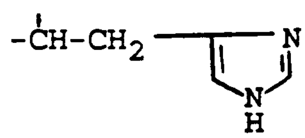

steht,
und innerhalb der dieser beiden Varianten

$X^+$ jeweils ein Kation aus der Reihe $H^+$,

$$\frac{Ca^{2+}}{2},$$

$N^+H_3[CH_2$-$(CH_2)_{16}$-$CH_3]$ oder
$N^+H_3[CH_2$-$(CH_2)_7$-$CH=CH$-$(CH_2)_7$-$CH_3]$ ist.

Erfindungsgemäß als Pigmentdispergator b) eingesetzte sulfonsäuregruppenhaltige Perylenverbindungen der allgemeinen Formel II lassen sich beispielsweise nach bekannten Verfahren herstellen durch Sulfonierung von geeigneten Perylen-Abkömmlingen wie Perylen-3,4,9,10-tetracarbonsäure-monoanhydrid-monoimid bzw. entsprechenden Tetracarbonsäure-diimiden, worin zumindest ein Imidstickstoff unsubstituiert ist, mittels konzentrierter Schwefelsäure oder rauchender Schwefelsäure (Oleum) oder durch Sulfochlorierung der erwähnten Perylen-Ausgangsstoffe mittels Chlorsulfonsäure samt anschließender Verseifung in Wasser.
Besonders bewährt hat sich die Synthese von solchen sulfonierten und von carboxylierten Perylenverbindungen der allgemeinen Formel II durch Kondensation von z.B. Perylen-3,4,9,10-tetracarbonsäure mit sulfonsäure- bzw. carbonsäuregruppenhaltigen, primären aliphatischen oder aromatischen Aminen der Formel $H_2N$-$R^4$-$Y^-X^+$, worin $R^4$, $Y^-$ und $X^+$ die obengenannte Bedeutung besitzen.

Die bei der Herstellung der Pigmentzubereitungen nach dieser Erfindung den Basispigmenten a) zuzusetzenden Mengen an Pigmentdispergatoren b) sind - soweit die angestrebte Pigmentqualität nicht negativ beeinflußt wird - nicht beschränkt, doch kommt im allgemeinen ein Gehalt von 0,1 bis 20 Gew.-%, insbesondere von 1 bis 10 Gew.-% an Dispergator, berechnet auf das jeweilige Pigmentgewicht, in

Betracht.

Die beanspruchten Pigmentzubereitungen können neben Pigment a) und Pigmentdispergatoren b) noch weitere Bestandteile enthalten, wie beispielsweise Tenside, Harze oder Antistaubmittel.

Pigmentzubereitungen im Sinne der vorliegenden Erfindung bestehen also im wesentlichen aus

a) 99,5 bis 80 Gew.-% mindestens einer Perylenverbindung der Formel I (Basispigment),

b) 0,5 bis 15 Gew.-% mindestens einer Perylenverbindung der Formel II (Dispergator),

c) 0 bis 5 Gew.-% eines nichtionischen Tensids, und

d) 0 bis 5 Gew.-% üblichen Zusatzstoffen,

wobei die Anteile der jeweiligen Komponenten auf das Gesamtgewicht der Zubereitung bezogen sind.

Bei den beanspruchten Pigmentzubereitungen handelt es sich in der Regel um feste Systeme von rieselfähiger, pulverförmiger Beschaffenheit bzw. Granulaten.

Der erfindungsgemäß erzielbare Dispergatoreffekt beruht auf einer Modifizierung der Oberflächenstruktur der Basispigmente durch gleichmäßige Beschichtung mit den sulfonsäure- und/oder carbonsäuregruppenhaltigen Perylenverbindungen der Formel II. So sind in einer Reihe von Fällen die Wirksamkeit der Pigmentdispergatoren und die Qualität der damit erzeugten Pigmentzubereitungen abhängig vom Zeitpunkt der Dispergatorzugabe zum Rohpigment und in welcher Phase des diesbezüglichen Herstellungsprozesses diese Beimischung erfolgt. Einen großen Einfluß hat in dieser Beziehung auch die Art und Weise der Applikation des Pigmentdispergators auf das Pigment. Die Wirksamkeit der Pigmentdispergatoren auf die Qualität der Pigmentzubereitungen richtet sich auch nach der Teilchengröße und Teilchenform der Pigmentdispergatoren sowie nach dem Umfang der belegbaren Pigmentoberfläche. Es kann ebenso vorteilhaft sein, den Pigmentdispergator erst im in Aussicht genommenen Anwendungsmedium dem Pigment direkt zuzufügen. Die jeweilige optimale Konzentration des Pigmentdispergators muß durch orientierende Vorversuche ermittelt werden, da die Verbesserung der Eigenschaften der Pigmente nicht immer linear mit der Pigmentdispergatormenge einhergeht.

Zum Ansetzen der beanspruchten Pigmentzubereitungen können sowohl Mischungen von Basispigmenten a) mit jeweils einem Pigmentdispergator b) verwendet werden, als auch Mischungen von Basispigmenten a) mit gleichzeitig mehreren Pigmentdispergatoren b). Sulfonsäuregruppenhaltige Pigmentdispergatoren sind im allgemeinen wirksamer als carboxylgruppenhaltige.

Nach der Erfindung kann die Herstellung der Pigmentzubereitungen auf verschiedene Weise erfolgen. So können die Pigmentdispergatoren schon im Stadium der Pigmentsynthese, im Rahmen eines Feinverteilungsprozesses oder einer anschließenden Lösungsmittelfinish-Behandlung eingetragen werden. Die Zugabe der Pigmentdispergatoren läßt sich beispielsweise im Verlauf einer Trockenmahlung eines Rohpigmentes mit oder ohne zusätzliche Mahlhilfsmittel auf einer Roll- oder Schwingmühle oder im Zuge einer Naßmahlung eines Rohpigments in wäßrigem, wäßrig-organischem oder organischem Mahlmedium, beispielsweise auf einer Perlmühle, durchführen. Gleichfalls bewährt hat sich die Zugabe der Pigmentdispergatoren vor oder während eines Druckfinishs für das zugrundeliegende Pigment in wäßrigem, wäßrig-saurem, wäßrig-organischem Medium. Die Pigmentdispergatoren können auch dem wasserfeuchten Pigmentpreßkuchen vor der Trocknung zugesetzt und eingearbeitet werden. Es ist schließlich möglich, Trockenmischungen von gemahlenen Pigmentdispergatoren mit dem Pigmentpulver vorzunehmen.

Die erfindungsgemäßen Pigmentzubereitungen lassen sich besonders zum Pigmentieren (Einfärben) von hochmolekularen organischen Materialien natürlicher oder synthetischer Herkunft einsetzen:

Hochmolekulare organische Materialien, die mit den beanspruchten Pigmentzubereitungen coloriert werden können, sind beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Pigmentzubereitungen als Toner oder in Form von Präparationen oder Dispersionen einzusetzen. Bezogen auf das zu pigmentierende hochmolekulare organische Material setzt man die beanspruchten Pigmentzubereitungen in einer Menge von vorzugsweise 1 bis 10 Gew.-% ein.

Besonders bevorzugte Lacksysteme sind in dieser Hinsicht Einbrennlacke aus der Klasse der Alkyd-/Melaminharz- oder Acryl-/Melaminharz-Lacke sowie Zweikomponentenlacke auf Basis von mit Polyisocyanat vernetzbarer Acrylharze. Von der Vielzahl der pigmentierbaren Druckfarben sind Druckfarben auf Basis Nitrocellulose besonders zu erwähnen.

Die erfindungsgemäßen Pigmentzubereitungen sind in vielen Anwendungsmedien leicht und bis zu hohen Feinheiten dispergierbar. Diese Dispersionen besitzen eine hohe Flockungsstabilität und zeigen hervorragende rheologische Eigenschaften selbst bei hoher Pigmentierung. Mit ihnen lassen sich Lackierungen und Drucke von hoher Farbstärke, hohem Glanz und hoher Transparenz mit hervorragenden Echtheitseigenschaften herstellen.

Die Pigmentzubereitungen sind als Farbmittel auch hervorragend geeignet zum Einfärben von verformbaren Kunststoffen, insbesondere Polyvinylchlorid, Polyethylen und Polypropylen. Es werden Färbungen von hoher Farbstärke und sehr guter Dispergierbarkeit erhalten.

Zur Beurteilung der Eigenschaften der beanspruchten Pigmentzubereitungen in Lacksystemen wurden aus der Vielzahl der bekannten Systeme ein Alkyd-/Melaminharz-Lack (AM6) auf Basis eines mittelöligen, nicht-trocknenden Alkydharzes aus synthetischen Fettsäuren und Phthalsäureanhydrid und eines mit Butanol veretherten Melaminharzes und Anteilen eines nicht-trocknenden Alkydharzes auf Basis von Ricinensäure (kurzölig) sowie ein Acrylharz-Einbrennlack auf Basis einer nicht-wäßrigen Dispersion (TSA-NAD) ausgewählt. In den nachfolgenden Beispielen wird darauf unter der Bezeichnung AM6 bzw. TSA-NAD verwiesen.

Die Rheologie des Mahlguts nach der Dispergierung (Millbase-Rheologie) wird anhand der folgenden fünfstufigen Skala beurteilt:

| | | | |
|---|---|---|---|
| 5 | dünnflüssig | 2 | leicht gestockt |
| 4 | flüssig | 1 | gestockt |
| 3 | dickflüssig | | |

Nach dem Verdünnen des Mahlguts auf die Pigmentendkonzentration wurde die Viskosität mit dem Viskospatel nach Rossmann, Typ 301, der Firma Erichsen beurteilt.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Ausprüfungen in Polyvinylchlorid (PVC) wurden bei 130°C und 160°C vorgenommen.

In den nachstehenden Beispielen beziehen sich Teile jeweils auf Gewichtsteile und Prozente jeweils auf Gewichtsprozente der so beschriebenen Substanzen. Die zur Identifizierung benutzten Gattungsbezeichnungen für erfindungsgemäß eingesetzte Pigmente sowie darauf gerichtete C.I.-Nummern sind dem COLOUR INDEX, 3. Auflage 1971 sowie Ergänzungen 1975, 1982 und 1987 entnommen.

**Beispiel 1**

108,9 g Perylen-3,4,9,10-tetracarbonsäure-dianhydrid im feuchten Zustand, entsprechend 50 g in trockener Form, werden mit 1441 ml Wasser angerührt. Dieser Vorlage werden 15 g Harzseife (50%ig) und als Pigmentdispergator 0,5 g Perylenverbindung mit der allgemeinen Formel II zugegeben, worin V die Gruppe $>N-CH_2-CH_2-SO_3^-H^+$ sowie W die Gruppe -O- bedeutet und n die Zahl 0 ist. Nunmehr läßt man bei 0° bis 5°C innerhalb von 15 Minuten 185,6 g Monomethylamin-Lösung (27,3 %ig) zutropfen, worauf der Ansatz 15 Minuten bei 0° bis 5°C gerührt wird. Nachdem im Laufe von 15 Minuten noch eine Lösung aus 28,5 g Calciumchlorid (wasserfrei) und 94,5 ml Wasser tropfenweise zugefügt sowie 1 Stunde nachgerührt worden ist, erhitzt man das Reaktionsgemisch auf 80°C und setzt den Rührvorgang weitere 2 Stunden bei dieser Temperatur fort. Sodann wird das Umsetzungsprodukt abgesaugt, durch Behandlung mit Wasser neutral und chloridfrei gewaschen und bei 80°C getrocknet. Man erhält 57,9 g einer Pigmentzubereitung auf Basis von C.I. Pigment Red 179 (Nr. 71130) mit der allgemeinen Formel I, worin A und B die Gruppe $>N-CH_3$ bedeuten und n die Zahl 0 ist.
Der nach der Synthese in der Pigmentzubereitung als Ca-Salz enthaltene Pigmentdispergator besitzt die allgemeine Formel II, worin jetzt aber V die Gruppe $>N-CH_2-CH_2-SO_3^-X^+$ und W die Gruppe $>N-CH_3$ bedeutet, $X^+$ das Metallkation

$$\frac{Ca^{2+}}{2}$$

darstellt und n die Zahl 0 ist.

Bei der Ausprüfung der Pigmentzubereitung im TSA-NAD-Lack werden transparente und farbstarke Lackierungen erzielt. Die Millbase-Rheologie des Produktes (15%ig) wird mit Note 4 bewertet. Hat man jedoch bei den obigen Maßnahmen zur Herstellung des Farbmittels auf den Zusatz des Pigmentdispergators verzichtet, so resultiert ein Pigment, dessen Millbase-Rheologie (15%ig) mit Note 1 bewertet wird.

**Beispiel 2**

108,9 g Perylen-3,4,9,10-tetracarbonsäure-dianhydrid im feuchten Zustand, entsprechend 50 g in trockener Form, werden mit 1441 ml Wasser angerührt. Dieser Vorlage werden 15 g Harzseife (50%ig) und als Pigmentdispergator 0,5 g Perylenverbindung mit der allgemeinen Formel II zugegeben, worin V und W jeweils die Gruppe $>N-CH_2-COO^-H^+$ bedeuten und n die Zahl 0 ist. Nunmehr läßt man bei 0° bis 5°C innerhalb von 15 Minuten 185,6 g Monomethylamin-Lösung (27,3 %ig) zutropfen, worauf der Ansatz 15 Minuten bei 0° bis 5°C gerührt wird. Nachdem im Laufe von 15 Minuten noch eine Lösung aus 28,5 g Calciumchlorid (wasserfrei) und 94,5 ml Wasser tropfenweise zugefügt sowie 1 Stunde bei 0° bis 5°C nachgerührt worden ist, erhitzt man das Reaktionsgemisch auf 80°C und setzt den Rührvorgang weitere 2 Stunden bei dieser Temperatur fort. Anschließend wird das Umsetzungsprodukt abgesaugt, durch Behandlung mit Wasser neutral und chloridfrei gewaschen und bei 80°C getrocknet. Man erhält 58,4 g einer Pigmentzubereitung auf Basis von C.I. Pigment Red 179 (Nr. 71130) mit der allgemeinen Formel I, worin A und B die Gruppe $>N-CH_3$ bedeuten und n die Zahl 0 ist.
Der nach der Synthese in der Pigmentzubereitung als Ca-Salz enthaltene Pigmentdispergator besitzt die allgemeine Formel II, worin jetzt aber V und W jeweils die Gruppe $>N-CH_2-COO^-X^+$ bedeuten, $X^+$ das Metallkation

$$\frac{Ca^{2+}}{2}$$

darstellt und n die Zahl 0 ist.
Bei der Ausprüfung der Pigmentzubereitung im TSA-NAD-Lack werden transparente und farbstarke Lackierungen erzielt. Die Millbase-Rheologie des Produktes (15%ig) wird mit Note 4-5 bewertet. Ohne den Pigmentdispergatorzusatz wird die Millbase-Rheologie des derart erzeugten Farbmittels mit Note 1 bewertet.

**Beispiel 3**

108,9 g Perylen-3,4,9,10-tetracarbonsäure-dianhydrid im feuchten Zustand, entsprechend 50 g in trockener Form, werden mit 1441 ml Wasser angerührt. Dieser Vorlage werden 15 g Harzseife (50%ig) und als Pigmentdispergator 1,25 g Perylenverbindung mit der allgemeinen Formel II zugegeben, worin V und W jeweils die Gruppe $>N-CH_2-CH_2-SO_3^-H^+$ bedeuten und n die Zahl 0 ist. Nunmehr läßt man bei 0° bis 5°C innerhalb von 15 Minuten 185,6 g Monomethylamin-Lösung (27,3 %ig) zutropfen, worauf der Ansatz 15 Minuten bei 0° bis 5°C gerührt wird. Nachdem im Laufe von 15 Minuten noch eine Lösung aus 28,5 g Calciumchlorid (wasserfrei) und 94,5 ml Wasser tropfenweise zugefügt sowie 1 Stunde bei 0° bis 5°C nachgerührt worden ist, erhitzt man das Reaktionsgemisch auf 80°C und setzt den Rührvorgang weitere 2 Stunden bei dieser Temperatur fort. Anschließend wird das Umsetzungsprodukt abgesaugt, durch Behandlung mit Wasser neutral und chloridfrei gewaschen und bei 80°C getrocknet. Man erhält 58,9 g einer Pigmentzubereitung auf Basis von C.I. Pigment Red 179 (Nr. 71130) mit der allgemeinen Formel I, worin A und B die Gruppe $>N-CH_3$ bedeuten und n die Zahl 0 ist.
Der nach der Synthese in der Pigmentzubereitung als Ca-Salz enthaltene Pigmentdispergator besitzt die allgemeine Formel II, worin jetzt aber V und W jeweils die Gruppe $>N-CH_2-CH_2-SO_3^-X^+$ bedeuten, $X^+$ das Metallkation

$$\frac{Ca^{2+}}{2}$$

darstellt und n die Zahl 0 ist.
Bei der Ausprüfung der Pigmentzubereitung im TSA-NAD-Lack werden transparente und farbstarke Lackierungen erzielt. Die Millbase-Rheologie des Produktes (15%ig) wird mit Note 4 bewertet. Ohne den Pigmentdispergatorzusatz wird die Millbase-Rheologie des so hergestellten Farbmittels mit Note 1 bewertet.

**Beispiel 4**

30 g Perylen-3,4,9,10-tetracarbonsäure-diimid, erzeugt als Reinpigment analog der Vorschrift von Beispiel 1 der EP-PS 0 039 912, werden in einen 1-Liter-Kunststoffbehälter eingebracht, der mit 1400 g Cylpebs (aus Korund, 12 mm Durchmesser; Hersteller: Groh GmbH, Hof) als Mahlkörper gefüllt ist, und dort vorgelegt. Diesem Ansatz werden als Pigmentdispergator 3 g Perylenverbindung mit der allgemeinen Formel II, worin V und W jeweils die Gruppe $>N-CH_2-CH_2-SO^-H^+$ bedeuten und n die Zahl 0 ist, sowie 3 g Stearylamin zugegeben und das Gemisch wird nun 4 Stunden lang unter Schütteln auf einer Schwingmühle (Typ ®Vibratom; Hersteller: Siebtechnik Mühlheim) fein vermahlen. Danach wird das Mahlgut von den Mahlkörpern abgesiebt. Man erhält 34 g Mahlgut.

34 g des obigen Mahlguts werden in 340 ml N-Methylpyrrolidon eingetragen. Sodann erhitzt man die Mischung auf 50 °C und rührt diese 2 Stunden bei dieser Temperatur nach. Anschließend werden 200 ml Wasser zugegeben, das Umsetzungsprodukt wird abgesaugt, durch Behandlung mit Wasser N-methylpyrrolidonfrei gewaschen und bei 80 °C getrocknet.

Man erhält 32,9 g einer Pigmentzubereitung auf Basis von C.I. Pigment Brown 26 (Nr. 71129) mit der allgemeinen Formel I, worin A und B die Gruppe >N-H bedeuten und n die Zahl 0 ist.

Der nach dem Finish in der Pigmentzubereitung als Stearylammonium-Salz enthaltene Pigmentdispergator besitzt die allgemeine Formel II, worin jetzt aber V und W die Gruppe $>N-CH_2-CH_2-SO_3^-X^+$ darstellen, $X^+$ die Gruppe $N^+H_3[CH_2-(CH_2)_{16}-CH_3]$ bedeutet und n die Zahl 0 ist.

Bei der Ausprüfung der Pigmentzubereitung im TSA-NAD-Lack werden transparentere, hellere und rötere Lackierungen erzielt als bei einer Ausfärbung mit einem Produkt ohne den Pigmentdispergatorzusatz.

**Beispiel 5**

20 g Perylen-3,4,9,10-tetracarbonsäure-N,N'-bis-(4'-methoxyphenylimid),erzeugt als Rohpigment nach den Angaben gemäß Beispiel 1 der US-PS 2 543 747, werden in ein 1-Liter-Porzellangefäß eingebracht, das mit 1200 g Quarzitperlen (3 mm Durchmesser) als Mahlkörper gefüllt ist, und dort vorgelegt. Diesem Ansatz werden 200 ml Aceton, 1,6 g Oleylamin sowie als Pigmentdispergator 2 g Perylenverbindung mit der allgemeinen Formel II, worin V und W jeweils die Gruppe

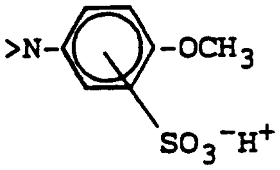

bedeuten und n die Zahl 0 darstellt, zugegeben und die Mischung wird nun 12 Stunden lang unter Schütteln auf einer Schwingmühle (wie in Beispiel 4) fein vermahlen. Anschließend werden die Quarzitperlen vom Mahlgut abgesiebt und mit Wasser abgespült. Das so isolierte Pigment wird dann abgesaugt, mit Wasser acetonfrei gewaschen und bei 80 °C getrocknet.

Man erhält 22,5 g einer Pigmentzubereitung auf Basis von C.I. Pigment Red 190 (Nr. 71140) mit der allgemeinen Formel I, worin A und B die Gruppe

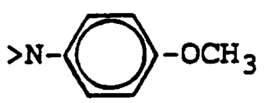

bedeuten und n die Zahl 0 ist.

Der nach der Lösungsmittelmahlung in der Pigmentzubereitung als Oleylammonium-Salz enthaltene Pigmentdispergator besitzt die allgemeine Formel II, worin jetzt aber V und W jeweils die Gruppe

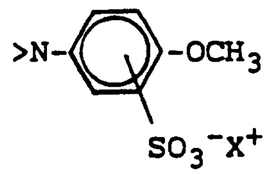

bedeuten,
$X^+$ die Gruppe $N^+H_3[CH_2\text{-}(CH_2)_7\text{-}CH=CH\text{-}(CH_2)_7\text{-}CH_3]$ darstellt und n die Zahl 0 ist.
Bei der Ausprüfung der Pigmentzubereitung im AM6-Lack werden sehr transparente, farbstarke und reine Lackierungen mit hohem Glanz erzielt. Ohne Zusatz des Pigmentdispergators erhaltene Produkte ergeben im Vergleich dazu nur deckende, farbschwache und trübere Lackierungen mit gutem Glanz.

**Beispiel 6**

30 g Perylen-3,4,9,10-tetracarbonsäure-N,N'-bis-(3',5'-dimethylphenylimid), hergestellt als Rohpigment nach den Angaben gemäß Beispiel 1 der DE-AS 1 067 157, werden in ein 1,4-Liter-Edelstahlgefäß eingebracht, das mit 1400 g Porzellankugeln (12 mm Durchmesser) als Mahlkörper gefüllt ist, und dort vorgelegt. Diesem Ansatz werden danach 90 g Natriumsulfat (wasserfrei), 0,7 g Stearylamin sowie als Pigmentdispergator 0,75 g Perylenverbindung mit der allgemeinen Formel II, worin V und W jeweils die Gruppe $>N\text{-}CH_2\text{-}CH_2\text{-}SO_3^-H^+$ bedeuten und n die Zahl 0 darstellt, zugegeben und die Mischung wird nun 8 Stunden unter Schütteln auf einer Schwingmühle (wie in Beispiel 4) fein vermahlen. Anschließend wird das Mahlgut von den Mahlkörpern abgesiebt, durch Behandlung mit heißem Wasser 1 Stunde bei 90 °C ausgerührt, sodann abgesaugt, durch Behandlung mit Wasser sulfatfrei gewaschen und bei 80 °C getrocknet.
Man erhält 28,9 g einer Pigmentzubereitung auf Basis von C.I. Pigment Red 149 (Nr. 71137) mit der allgemeinen Formel I, worin A und B die Gruppe

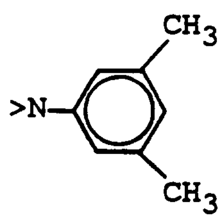

bedeuten und n die Zahl 0 ist.
Der nach der Salzvermahlung in der Pigmentzubereitung als Stearylammonium-Salz enthaltene Pigmentdispergator besitzt die allgemeine Formel II, worin jetzt aber V und W jeweils die Gruppe $>N\text{-}CH_2\text{-}CH_2\text{-}SO_3^-X^+$ bedeuten, $X^+$ die Gruppe $N^+H_3[CH_2\text{-}(CH_2)_{16}\text{-}CH_3]$ darstellt und n die Zahl 0 ist.
Bei der Ausprüfung der Pigmentzubereitung in PVC werden transparente, helle, farbstarke und reine Ausfärbungen mit einwandfreier Ausblutechtheit erzielt. Das ohne Pigmentdispergatorzusatz hergestellte Pigment liefert zum Unterschied davon in PVC deckendere, dunklere und blauere Ausfärbungen.

**Beispiel 7**

30 g Perylen-3,4,9,10-tetracarbonsäure-N,N'-bis-(4'-ethoxy-phenylimid),hergestellt als Rohpigment nach den Angaben gemäß Beispiel 1 der DE-PS 1 113 773, werden in einen 1,4-Liter-Edelstahlbehälter eingebracht, der mit 1300 g Porzellankugeln als Mahlkörper gefüllt ist, und dort vorgelegt. Nachdem man das zu behandelnde Pigment zuvor noch mit 80 g Natriumsulfat (wasserfrei) und 10 g Calciumchlorid (wasserfrei) beschickt hat, werden dem Ansatz außerdem als Pigmentdispergator 1 zuerst 1,5 g Perylenverbindung mit der allgemeinen Formel II, worin V und W jeweils die Gruppe $>N\text{-}CH_2\text{-}CH_2\text{-}SO_3^-H^+$ bedeuten und n die Zahl 0 ist, und als Pigmentdispergator 2 danach 1,5 g Perylenverbindung mit der allgemeinen Formel II, worin V und W die Gruppe

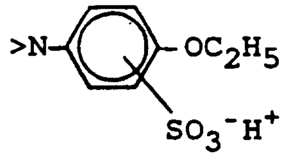

bedeuten und n die Zahl 0 ist, hinzufügt. Diese Mischung wird nun 8 Stunden unter Schütteln auf einer Schwingmühle (wie in Beispiel 4) fein vermahlen. Anschließend wird das Mahlgut von den Mahlkörpern abgesiebt, mit heißem Wasser 1 Stunde bei 90 °C ausgerührt, sodann abgesaugt, durch Behandlung mit Wasser sulfatfrei gewaschen und bei 80 °C getrocknet.
Man erhält 30,8 g einer Pigmentzubereitung auf Basis von C.I. Pigment Red 123 (Nr. 71145) mit der allgemeinen Formel I, worin A und B die Gruppe

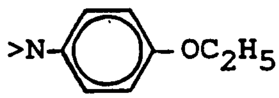

bedeuten und n Zahl 0 ist.
Der nach der Salzvermahlung in der Pigmentzubereitung als Ca-Salz enthaltene Pigmentdispergator 1 besitzt die allgemeine Formel II, worin jetzt aber V und W jeweils die Gruppe $>N-CH_2-CH_2-SO_3^-X^+$ bedeuten, $X^+$ das Metallkation

$$\frac{Ca^{2+}}{2}$$

darstellt und n die Zahl 0 ist, und der nach der Salzvermahlung ebenfalls als Ca-Salz vorliegende Pigmentdispergator 2 besitzt die allgemeine Formel II, worin jetzt aber V und W jeweils die Gruppe

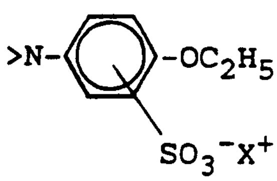

bedeuten, $X^+$ das Metallkation

$$\frac{Ca^{2+}}{2}$$

darstellt und n die Zahl 0 ist.
Bei der Ausprüfung der Pigmentzubereitung im AM6-Lack werden transparente, dunkle und farbstarke Lackierungen erzielt. Der Glanzwert beträgt 72, die Viskosität des 5%igen Lackes liegt bei 7,0". Ohne Pigmentdispergatorzusatz hergestellte Produkte erbringen hingegen deckende, helle und farbschwächere Lackierungen. Der Glanzwert beträgt dann 12, die Viskosität des 5%igen Lackes liegt bei 14,2".

**Beispiel 8**

30 g Perylen-3,4,9,10-tetracarbonsäure-diimid mit einem Bromgehalt von 25,45 %, hergestellt analog der Vorschrift von Beispiel 9 der EP-PS 0 039 912, werden in ein 1,4-Liter-Kunststoffgefäß eingebracht, das

mit 1400 g Cylpebs (wie in Beispiel 4) gefüllt ist, und dort vorgelegt. Außerdem werden dem Ansatz nacheinander als Pigmentdispergator 3 g Perylenverbindung mit der allgemeinen Formel II, worin V und W die Gruppe >N-$CH_2$-$CH_2$-$SO_3^-H^+$ bedeutet und n die Zahl 0 ist, sowie 3 g Stearylamin zugegeben, worauf dieses Gemisch 12 Stunden lang auf einer Schwingmühle (wie in Beispiel 4) fein vermahlen und das Mahlgut durch Absieben isoliert wird.
31 g des obigen Mahlguts werden in 340 ml N-Methylpyrrolidon eingetragen, das Gemisch wird sodann auf 50 ° C erhitzt und 3 Stunden bei dieser Temperatur nachgerührt. Anschließend gibt man 200 ml Wasser zu, saugt das Umsetzungsprodukt ab, wäscht es mit Wasser N-methylpyrrolidonfrei und trocknet es bei 80 ° C.
Man erhält 29,5 g einer Pigmentzubereitung auf Basis von bromiertem Perylen-3,4,9,10-tetracarbonsäurediimid mit der allgemeinen Formel I, worin A und B die Gruppe >N-H bedeuten und D Brom darstellt und n im Durchschnitt den Wert 1,7 hat.
Der nach dem Finish in der Pigmentzubereitung als Stearylammonium-Salz enthaltene Pigmentdispergator besitzt die allgemeine Formel II, worin jetzt aber V und W die Gruppe >N-$CH_2$-$CH_2$-$SO_3^-X^+$ darstellen, $X^+$ die Gruppe $N^+H_3[CH_2$-$(CH_2)_{16}$-$CH_3]$ bedeutet und n die Zahl 0 ist.
Bei der Ausprüfung der Pigmentzubereitung im TSA-NAD-Lack werden transparente, helle, farbstarke und reine Lackierungen erzielt. Ohne Beimischung des Pigmentdispergators sind die Lackierungen mit dem Pigment deckend, dunkel und farbschwach. Die rheologischen Eigenschaften der beiden Produkte sind etwa gleich. Im Nitrocellulosetiefdruck erhält man mit der obigen Zubereitung sehr transparente, farbstarke und reine Ausfärbungen. Ohne Pigmentdispergatorzusatz sind die Ausfärbungen des Farbmittels jedoch deckender, farbschwächer, blauer und trüber.

**Beispiel 9**

19,2 g Perylen-3,4,9,10-tetracarbonsäure-N,N'-di(methylimid), hergestellt analog der Vorschrift von Beispiel 1 der EP-PS 0 088 392 ohne Zusatz von oberflächenaktiven Mitteln, werden mit 0,8 g Perylenverbindung mit der allgemeinen Formel II, worin V und W die Gruppe >N-$CH_2$-$CH_2$-$SO_3^-H^+$ bedeuten und n die Zahl 0 ist, als Pigmentdispergator gemischt. Man erhält eine Pigmentzubereitung auf Basis von C.I. Pigment Red 179 (Nr. 71130).
Bei der Ausprüfung der Pigmentzubereitung im TSA-NAD-Lack werden transparente, helle, sehr farbstarke und reine Lackierungen mit hohem Glanz erzielt. Damit erzeugte Metallic-Lackierungen sind sehr farbstark und rein. Die Millbase-Rheologie des Produktes (15%ig) wird mit Note 5 bewertet. Ohne Beimischung des Pigmentdispergators sind die Ausfärbungen mit dem Farbmittel deckender und farbschwächer. Die Millbase-Rheologie (15%ig) wird dann mit Note 1 bewertet.

**Beispiel 10**

17,6 g Perylen-3,4,9,10-tetracarbonsäure-N,N'-di(methylimid), hergestellt analog der Vorschrift von Beispiel 1 der EP-PS 0 088 392 ohne Zusatz von oberflächenaktiven Mitteln, werden mit 2,4 g Perylenverbindung mit der allgemeinen Formel II, worin V und W die Gruppe >N-$CH_2$-$CH_2$-$SO_3^-H^+$ bedeuten und n die Zahl 0 ist, als Pigmentdispergator gemischt. Man erhält eine Pigmentzubereitung auf Basis von C.I. Pigment Red 179 (Nr. 71130).
Bei der Ausprüfung der Pigmentzubereitung im TSA-NAD-Lack werden transparente, helle, sehr farbstarke und reine Lackierungen mit hohem Glanz erzielt. Damit erzeugte Metallic-Lackierungen sind sehr farbstark und rein. Die Millbase-Rheologie des Produktes (15%ig) wird mit Note 5 bewertet. In Abwesenheit des Pigmentdispergators mit dem Farbmittel durchgeführte Ausfärbungen sind deckender und farbschwächer. Die Millbase-Rheologie (15%ig) wird in diesem Fall mit Note 1 bewertet.

**Beispiel 11** (Anwendungsbeispiel)

a) Volltonlack (15%ig)
Eine Mischung aus 27 g eines Acrylharz-Lackes (mit 25 % Festkörpergehalt), 4,86 g Perylen-3,4,9,10-tetracarbonsäure-N,N'-dimethylimid (C.I. Pigment Red 179), hergestellt analog der Vorschrift von Beispiel 1 der EP-PS 0 088 392 ohne Zusatz von oberflächenaktiven Mitteln, sowie als Pigmentdispergator 0,54 g Perylenverbindung mit der allgemeinen Formel II, worin V und W die Gruppe >N-$CH_2$-$CH_2$-$SO_3^-H^+$ bedeuten und n die Zahl 0 ist, wird in einem verschlossenen Plastikbecher zusammen mit 60 ml Quarzitperlen (3 mm Durchmesser) 60 Minuten auf einem Paint-Shaker geschüttelt. Danach werden portionsweise unter Rühren 3,6 g eines Acrylharzes (mit 51 % Festkörpergehalt) zugefügt und der Ansatz wird nochmals 5 Minuten auf dem Paint-Shaker geschüttelt, worauf man die Quarzkugeln durch

Absieben entfernt.

Die resultierende Lackfarbe weist 15 % Pigmentgehalt auf. Die Millbase-Rheologie derselben wird mit Note 5 bewertet. Im Falle eines entsprechenden, aber ohne den Pigmentdispergator erzeugten Volltonlacks wird die Millbase-Rheologie des Produktes mit Note 1 bewertet.

b) Volltonlack (6%ig)

Der unter Teil a) hergestellte 15%ige Volltonlack wird unter Rühren mit 54 g eines Melaminharz-Lackes (mit 43 % Festkörpergehalt) versetzt. Danach wird das Gemisch 5 Minuten auf dem Paint-Shaker geschüttelt.

Der so erhaltene 6%ige Volltonlack wird mit einem Handcoater auf einen weißen Kartonstreifen gezogen, auf dem am oberen Ende ein schwarzer Streifen aufgedruckt ist, und daraufhin im Trockenschrank während 30 Minuten bei 140 °C eingebrannt.

Man erhält über dem weißen bzw. schwarzen Untergrund eine transparente, helle, farbstarke und hochglänzende Lackierung. Ohne die Beimischung des Pigmentdispergators fällt die Lackierung des Farbmittels deckender und farbschwächer aus.

## Patentansprüche

**1.** Pigmentzubereitungen, gekennzeichnet, durch einen Gehalt an

a) als Basispigment mindestens einer Perylenverbindung der allgemeinen Formel I

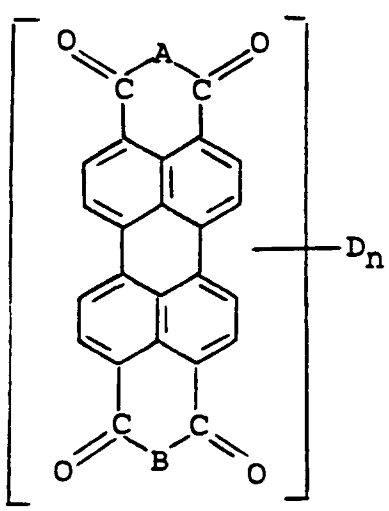

(I),

in welcher

A einen bivalenten Rest -O- oder >NR[1] und

B einen bivalenten Rest -O- oder >NR[2] bedeutet,

D ein Chlor- oder Bromatom und sofern $n > 1$ ggf. eine Kombination davon darstellt, und

n eine Zahl von 0 bis 4 ist;

wobei in den obigen Resten A und B dann

$R^1$ und $R^2$ unabhängig voneinander jeweils für ein Wasserstoffatom oder eine $C_1$-$C_4$-Alkylgruppe oder für eine Phenylgruppe stehen, die unsubstituiert oder durch Halogen, $C_1$-$C_4$-Alkyl, $C_1$-$C_4$-Alkoxy oder Phenylazo ein-oder mehrfach substituiert sein kann;

und an

b) als Pigmentdispergator mindestens einer Perylenverbindung der allgemeinen Formel II

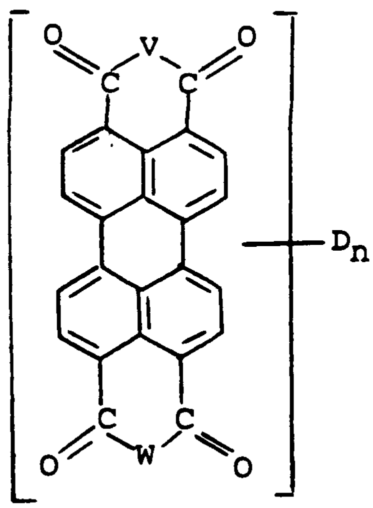

(II),

in welcher

- V einen bivalenten Rest -O-, >$NR^3$ oder >$N$-$R^4$-$Y^-X^+$ und
- W den bivalenten Rest >$N$-$R^4$-$Y^-X^+$ bedeutet,
- D ein Chlor- oder Bromatom und sofern n > 1 ggf. eine Kombination davon darstellt, und
- n eine Zahl von 0 bis 4 ist;

wobei in den obigen Resten V und W dann

- $R^3$ für ein Wasserstoffatom oder eine $C_1$-$C_{18}$-Alkylgruppe oder für eine Phenylgruppe steht, die unsubstituiert oder durch Halogen, $C_1$-$C_4$-Alkyl, $C_1$-$C_4$-Alkoxy oder Phenylazo ein- oder mehrfach substituiert sein kann,
- $R^4$ für eine $C_1$-$C_{18}$-Alkylengruppe steht, die innerhalb der C-C-Kette durch ein Brückenglied aus der Reihe -O-, -$NR^5$-, -S-, Phenylen, -CO-, -$SO_2$- oder -$CR^6R^7$- oder eine chemisch sinnvolle Kombination davon ein- oder mehrfach unterbrochen sein kann und in dem seinerseits die Bestandteile $R^5$, $R^6$ und $R^7$ unabhängig voneinander jeweils ein Wasserstoffatom oder eine $C_1$-$C_4$-Alkylgruppesind, die unsubstituiert oder durch einen heterocyclischen Rest substituiert sein kann,
  oder für eine Phenylengruppe steht, die unsubstituiert oder durch $C_1$-$C_4$-Alkyl oder $C_1$-$C_4$-Alkoxy ein- oder mehrfach substituiert sein kann,
- $Y^-$ einen der anionischen Reste -$SO_3^-$ oder -$COO^-$ bedeutet, und
- $X^+$ das Hydron $H^+$ oder das Äquivalent

$$\frac{M^{m+}}{m}$$

eines Metallkations aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 ist;
oder ein Ammoniumion $N^+R^8R^9R^{10}R^{11}$ definiert, wobei die Substituenten $R^8$, $R^9$, $R^{10}$ und $R^{11}$ am quartären N-Atom unabhängig voneinander jeweils ein Wasserstoffatom oder eine Gruppe aus der Reihe $C_1$-$C_{30}$-Alkyl, $C_1$-$C_{30}$-Alkenyl, $C_5$-$C_{30}$-Cycloalkyl, unsubstituiertes oder durch $C_1$-$C_8$-alkyliertes Phenyl oder eine (Poly)alkylenoxygruppe

$$-(\overset{R^7}{\overset{|}{C}}H-CH_2-O-)_k-H$$

sind,
in der $R^7$ für Wasserstoff oder $C_1$-$C_4$-Alkyl steht und k eine Zahl von 1 bis 30 ist und in denen ggf. als $R^8$, $R^9$, $R^{10}$ und/oder $R^{11}$ ausgewiesenes Alkyl, Alkenyl, Cycloalkyl, Phenyl oder Alkylphenyl außerdem durch Amino, Hydroxy und/oder Carboxy substituiert sein können;
oder wobei die Substituenten $R^8$ und $R^9$ zusammen mit dem quartären N-Atom ein fünf- bis siebengliedriges gesättigtes Ringsystem, das ggf. noch weitere Heteroatome enthält, bilden können;
oder wobei die Substituenten $R^8$, $R^9$ und $R^{10}$ zusammen mit dem quartären N-Atom ein fünf- bis siebengliedriges aromatisches Ringsystem, das ggf. noch weitere Heteroatome enthält und an dem ggf. zusätzliche Ringe ankondensiert sind, bilden können.

**2.** Pigmentzubereitungen gemäß Anspruch 1, dadurch gekennzeichnet, daß als Basispigment a) mindestens eine Perylenverbindung der dort angegebenen allgemeinen Formel I vorliegt, in welcher
A einen bivalenten Rest -O- oder >$NR^1$ und
B einen bivalenten Rest -O- oder >$NR^2$ bedeutet sowie
D und n wie in Anspruch 1 definiert sind,
mit der Maßgabe, daß die jeweilige Bedeutung der obigen Reste A und B identisch ist, und wobei dann $R^1$ und $R^2$ übereinstimmend jeweils für ein Wasserstoffatom oder eine Gruppe aus der Reihe Methyl oder den Strukturen

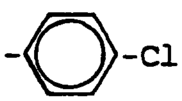, 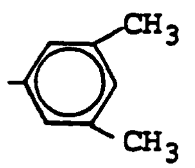, 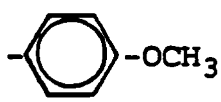, 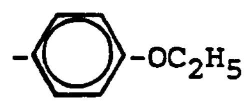

oder 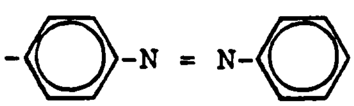

stehen.

**3.** Pigmentzubereitungen gemäß Anspruch 1, dadurch gekennzeichnet, daß als Pigmentdispergator b) mindestens eine Perylenverbindung der dort angegebenen allgemeinen Formel II vorliegt, in welcher
V einen bivalenten Rest -O-, >$NR^3$ oder >$N$-$R^4$-$Y^-X^+$ und
W den bivalenten Rest >$N$-$R^4$-$Y^-X^+$ bedeutet sowie
D und n wie in Anspruch 1 definiert sind,
wobei in den obigen Resten V und W dann
$R^3$ für ein Wasserstoffatom oder eine $C_1$-$C_4$-Alkylgruppe oder für eine Phenylgruppe steht, die unsubstituiert oder durch Chlor, Brom, Methyl, Ethyl, Methoxy und/oder Ethoxy substituiert sein kann,
$R^4$ für eine geradkettige oder verzweigte $C_1$-$C_6$-Alkylengruppe oder eine Phenylengruppe steht, die unsubstituiert oder durch Methyl, Ethyl, Methoxy und/oder Ethoxy substituiert sein kann,
$Y^-$ einen der anionischen Reste -$SO_3^-$ oder -$COO^-$ darstellt, und
$X^+$ das Hydron $H^+$ oder das Äquivalent

$$\frac{M^{m+}}{m}$$

eines Metallkations wie in Anspruch 1 aus der Reihe $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ oder $Fe^{3+}$; oder ein Ammoniumion $N^+R^8R^9R^{10}R^{11}$ darstellt, in dem die Substituenten $R^8$, $R^9$ und $R^{10}$ am quartären N-Atom unabhängig voneinander jeweils ein Wasserstoffatom oder die Gruppe $C_2$-$C_3$-Hydroxyalkyl und $R^{11}$ eine der Gruppen aus der Reihe $C_1$-$C_{30}$-Alkyl, $C_1$-$C_{30}$-Alkenyl, $C_2$-$C_3$-Hydroxyalkyl

oder $C_5$-$C_6$-Cycloalkyl sind.

4. Pigmentzubereitungen gemäß Anspruch 1 oder 3, dadurch gekennzeichnet, daß als Pigmentdispergator b) mindestens eine halogenfreie Perylenverbindung der dort angegebenen allgemeinen Formel II vorliegt, in welcher

V einen bivalenten Rest -O-, >$NR^3$ oder >$N$-$R^4$-$SO_3^-X^+$ und
W den bivalenten Rest >$N$-$R^4$-$SO_3^-X^+$ bedeutet sowie
n die Zahl 0 ist,

wobei in den obigen Resten V und W dann
$R^3$ die in Anspruch 1 ausgewiesene Bedeutung zukommt,
$R^4$ für eine Gruppe aus der Reihe Ethylen oder Propylen oder den Strukturen

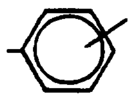 , 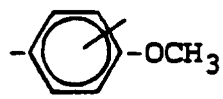 oder 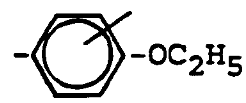

steht, und

$X^+$ ein Kation aus der Reihe $H^+$,

$$\frac{Ca^{2+}}{2},$$

$N^+H_3[CH_2$-$(CH_2)_{16}$-$CH_3]$ oder
$N^+H_3[CH_2$-$(CH_2)_7$-$CH=CH$-$(CH_2)_7$-$CH_3]$ ist.

5. Pigmentzubereitungen gemäß Anspruch 1 oder 3, dadurch gekennzeichnet, daß als Pigmentdispergator b) mindestens eine halogenfreie Perylenverbindung der dort angegebenen allgemeinen Formel II vorliegt, in welcher

V einen bivalen Rest -O-, >$NR^3$ oder >$N$-$R^4$-$COO^-X^+$ und
W den bivalenten Rest >$N$-$R^4$-$COO^-X^+$ bedeutet sowie
n die Zahl 0 ist,

wobei in den obigen Resten V und W dann
$R^3$ die in Anspruch 1 ausgewiesene Bedeutung zukommt,
$R^4$ für eine Gruppe aus der Reihe $C_1$-$C_6$-Alkylen oder der Struktur

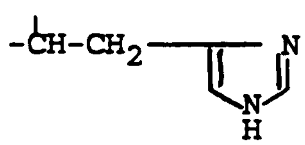

steht, und

$X^+$ ein Kation aus der Reihe $H^+$,

$$\frac{Ca^{2+}}{2},$$

$N^+H_3[CH_2$-$(CH_2)_{16}$-$CH_3]$ oder
$N^+H_3[CH_2$-$(CH_2)_7$-$CH=CH$-$(CH_2)_7$-$CH_3]$ ist.

6. Pigmentzubereitungen gemäß einem oder mehreren der Ansprüche 1 bis 5, dadurch gekennzeichnet, daß die darin vorhandenen di- oder monosulfonsäure- und di- oder monocarbonsäuregruppenhaltigen

Pigmentdispergatoren b) durch Kondensation von Perylen-3,4,9,10-tetracarbonsäure mit sulfonsäure- oder carbonsäuregruppenhaltigen, primären aliphatischen oder aromatischen Aminen der Formel III

$H_2N\text{-}R^4\text{-}Y^-X^+$ (III),

worin $R^4$, $Y^-$ und $X^+$ die in Anspruch 1 ausgewiesene Bedeutung besitzen, hergestellt worden sind.

**7.** Pigmentzubereitungen gemäß einem oder mehreren der Ansprüche 1 bis 6, bestehend im wesentlichen aus
a) 99,5 bis 80 Gew.-% mindestens einer Perylenverbindung der Formel I (Basispigment),
b) 0,5 bis 15 Gew.-% mindestens einer Perylenverbindung der Formel II (Dispergator),
c) 0 bis 5 Gew.-% eines nichtionischen Tensids und
d) 0 bis 5 Gew.-% üblichen Zusatzstoffen,
wobei die Anteile der jeweiligen Komponenten auf das Gesamtgewicht der Zubereitung bezogen sind.

**8.** Verfahren zur Herstellung der gemäß einem oder mehreren der Ansprüche 1 bis 7 definierten Pigmentzubereitungen, dadurch gekennzeichnet, daß die Oberflächenstruktur der Basispigmente a) mit einem oder mehreren Pigmentdispergatoren b) gleichmäßig beschichtet wird.

**9.** Verfahren gemäß Anspruch 8, dadurch gekennzeichnet, daß man die Pigmentdispergatoren b) dem Umsetzungsmedium während der Synthese der Basispigmente a) zusetzt.

**10.** Verfahren gemäß Anspruch 8, dadurch gekennzeichnet, daß man die Pigmentdispergatoren b) dem wasserfeuchten Preßkuchen der Basispigmente a) zusetzt.

**11.** Verfahren gemäß Anspruch 8, dadurch gekennzeichnet, daß man die Pigmentdispergatoren b) bei einer Feinverteilung von getrockneten Rohpigmenten a) im Verlauf einer Trockenmahlung oder Naßmahlung zusetzt.

**12.** Verfahren gemäß Anspruch 8, dadurch gekennzeichnet, daß man die Pigmentdispergatoren b) im Verlauf einer Lösungsmittelfinish-Behandlung von Basispigmenten a) zusetzt.

**13.** Verfahren gemäß Anspruch 8, dadurch gekennzeichnet, daß man die Pigmentdispergatoren b) in trockenem Zustand mit pulverförmigen Basispigmenten a) vermischt.

**14.** Verwendung der gemäß einem oder mehreren der Ansprüche 1 bis 7 definierten Pigmentzubereitungen als Farbmittel zum Pigmentieren von hochmolekularen organischen Materialien natürlicher oder synthetischer Herkunft in Form plastischer Massen, Schmelzen, Spinnlösungen, Lacken, Anstrichfarben oder Druckfarben.

**15.** Verwendung gemäß Anspruch 14 zum Pigmentieren (Einfärben) von Lacksystemen des Typs der Alkyd-Melaminharz- oder Acryl-Melaminharz-Einbrennlacke oder des Typs der Zweikomponentenlacke auf Basis von mit Polyisocyanat vernetzbaren Acrylharzen.

**16.** Verwendung gemäß Anspruch 14 zum Pigmentieren (Einfärben) von Druckfarben auf Basis Nitrocellulose.

**17.** Verwendung gemäß Anspruch 14 zum Pigmentieren (Einfärben) von verformbaren Kunststoffen.

## Claims

**1.** Pigment preparations characterized by the fact they contain

a) as the base pigment at least one perylene compound of the formula I

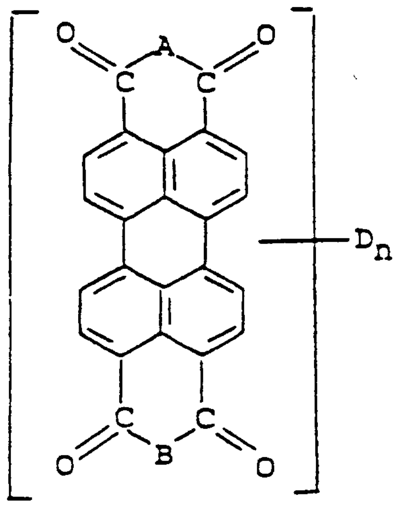

(I)

in which

- A is a bivalent radical -O- or >$NR^1$ and
- B is a bivalent radical -O- or >$NR^2$,
- D is a chlorine or bromine atom, and if n > 1, optionally a combination thereof, and
- n is a number from 0 to 4;

in which, in the above radicals A and B, then

- $R^1$ and $R^2$ independently of one another are each a hydrogen atom or a $C_1$-$C_4$-alkyl group, or a phenyl group which can be unsubstituted or mono- or polysubstituted by halogen, $C_1$-$C_4$-alkyl, $C_1$-$C_4$-alkoxy or phenylazo;

and

b) as the pigment-dispersing agent at least one perylene compound of the formula II

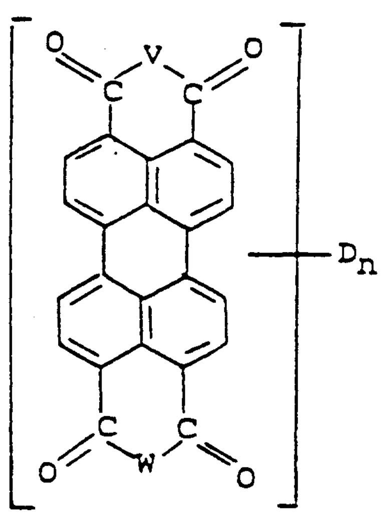

(II)

in which

- V is a bivalent radical -O-, >$NR^3$ or >$N-R^4-Y^-X^+$ and
- W is the bivalent radical >$N-R^4-Y^-X^+$,
- D is a chlorine or bromine atom, and if n > 1, optionally a combination thereof, and
- n is a number from 0 to 4;

in which, in the above radicals V and W, then

$R^3$ is a hydrogen atom or a $C_1$-$C_{18}$-alkyl group, or is a phenyl group which can be unsubstituted or mono- or polysubstituted by halogen, $C_1$-$C_4$-alkyl, $C_1$-$C_4$-alkoxy or phenylazo,

$R^4$ is a $C_1$-$C_{18}$-alkylene group, which can be interrupted once or several times within the C-C chain by a bridge member from the series comprising -O-, $-NR^5-$, -S-, phenylene, -CO-, $-SO_2-$ and $-CR^6R^7-$, or a chemically appropriate combination thereof, and in which in turn the constituents $R^5$, $R^6$ and $R^7$ independently of one another are each a hydrogen atom or a $C_1$-$C_4$-alkyl group which can be unsubstituted or substituted by a heterocyclic radical, or is a phenylene group which can be unsubstituted or mono- or polysubstituted by $C_1$-$C_4$-alkyl or $C_1$-$C_4$-alkoxy,

$Y^-$ is one of the anionic radicals $-SO_3^-$ or $-COO^-$ and

$X^+$ is the hydrogen ion $H^+$ or the equivalent

$$\frac{M^{m+}}{m}$$

of a metal cation from main group 1 to 5 or from sub-group 1 or 2 or 4 to 8 of the periodic table of the chemical elements, in which m is one of the numbers 1, 2 or 3; or is an ammonium ion $N^+R^8R^9R^{10}R^{11}$, in which the substituents $R^8$, $R^9$, $R^{10}$ and $R^{11}$ on the quaternary nitrogen atom independently of one another are each a hydrogen atom or a group from the series comprising $C_1$-$C_{30}$-alkyl, $C_2$-$C_{30}$-alkenyl, $C_5$-$C_{30}$-cycloalkyl, unsubstituted or $C_1$-$C_8$-alkylated phenyl or a (poly)alkylenoxy group

$$-(\overset{R^7}{\overset{|}{C}}H-CH_2-O-)_k-H,$$

in which $R^7$ is hydrogen or $C_1$-$C_4$-alkyl and k is a number from 1 to 30, and in which alkyl, alkenyl, cycloalkyl, phenyl or alkylphenyl designated as $R^8$, $R^9$, $R^{10}$ and/or $R^{11}$ can also optionally be substituted by amino, hydroxyl and/or carboxyl; or in which the substituents $R^8$ and $R^9$, together with the quaternary nitrogen atom, can form a five-to seven-membered saturated ring system, which optionally also contains further hetero atoms; or in which the substituents $R^8$, $R^9$ and $R^{10}$, together with the quaternary nitrogen atom, can form a five-to seven-membered aromatic ring system, which optionally also contains further hetero atoms and to which additional rings are optionally fused.

**2.** Pigment preparations according to claim 1, characterized in that the base pigment a) present is at least one perylene compound of the formula I given therein, in which

A is a bivalent radical -O- or $>NR^1$,

B is a bivalent radical -O- or $>NR^2$ and

D and n are as defined in claim 1,

with the proviso that the particular meaning of the above radicals A and B is the same, and in which then

$R^1$ and $R^2$ correspondingly are each a hydrogen atom or a group from the series comprising methyl or the structures

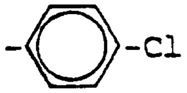, 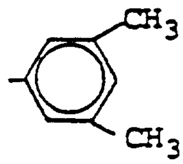, 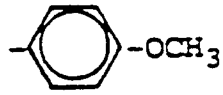, 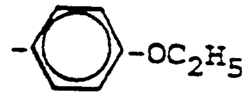

or 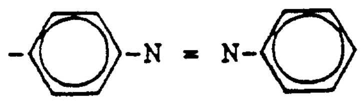.

**3.** Pigment preparations according to claim 1, characterized in that the pigment-dispersing agent b) present is at least one perylene compound of the formula II given therein, in which

- V is a bivalent radical -O-, $>NR^3$ or $>N\text{-}R^4\text{-}Y^-X^+$,
- W is the bivalent radical $>N\text{-}R^4\text{-}Y^-X^+$ and
- D and n are as defined in claim 1,

in which, in the above radicals V and W, then

- $R^3$ is a hydrogen atom or a $C_1$-$C_4$-alkyl group, or is a phenyl group which can be unsubstituted or substituted by chlorine, bromine, methyl, ethyl, methoxy and/or ethoxy,
- $R^4$ is a straight-chain or branched $C_1$-$C_6$-alkylene group, or a phenylene group, which can be unsubstituted or substituted by methyl, ethyl, methoxy and/or ethoxy,
- $Y^-$ is one of the anionic radicals $-SO_3^-$ or $-COO^-$ and
- $X^+$ is the hydrogen ion $H^+$ or the equivalent

$$\frac{M^{m+}}{m}$$

of a metal cation as in claim 1, from the series comprising $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ or $Fe^{3+}$; or is an ammonium ion $N^+R^8R^9R^{10}R^{11}$, in which the substituents $R^8$, $R^9$ and $R^{10}$ on the quaternary nitrogen atom independently of one another are each a hydrogen atom or the group $C_2$-$C_3$-hydroxyalkyl and $R^{11}$ is one of the groups from the series comprising $C_1$-$C_{30}$-alkyl, $C_2$-$C_{30}$-alkenyl, $C_2$-$C_3$-hydroxyalkyl and $C_5$-$C_6$-cycloalkyl.

**4.** Pigment preparations according to claim 1 or 3, characterized in that the pigment-dispersing agent b) present is at least one halogen-free perylene compound of the formula II given therein, in which

- V is a bivalent radical -O-, $>NR^3$ or $>N\text{-}R^4\text{-}SO_3^-X^+$,
- W is the bivalent radical $>N\text{-}R^4\text{-}SO_3^-X^+$ and
- n is the number 0,

in which, in the above radicals V and W, then

- $R^3$ has the meaning given in claim 1,
- $R^4$ is a group from the series comprising ethylene or propylene or the structures

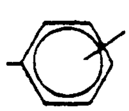, 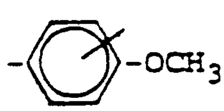 or 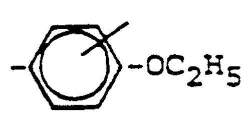

and

- $X^+$ is a cation from the series comprising $H^+$,

$$\frac{Ca^{2+}}{2},$$

$N^+H_3[CH_2\text{-}(CH_2)_{16}\text{-}CH_3]$ or
$N^+H_3[CH_2\text{-}(CH_2)_7\text{-}CH=CH\text{-}(CH_2)_7\text{-}CH_3]$.

**5.** Pigment preparations according to claim 1 or 3, characterized in that the pigment-dispersing agent b) present is at least one halogen-free perylene compound of the formula II given therein, in which V is a bivalent radical -O-, $>NR^3$ or $>N\text{-}R^4\text{-}COO^-X^+$,

W is the bivalent radical $>N\text{-}R^4\text{-}COO^-X^+$ and
n is the number 0,

in which, in the above radicals V and W, then

$R^3$ has the meaning given in claim 1,
$R^4$ is a group from the alkylene or the structure

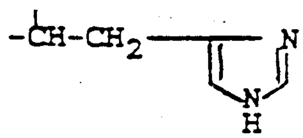

and

$X^+$ is a cation from the series comprising $H^+$,

$$\frac{Ca^{2+}}{2},$$

$N^+H_3[CH_2\text{-}(CH_2)_{16}\text{-}CH_3]$ or
$N^+H_3[CH_2\text{-}(CH_2)_7\text{-}CH=CH\text{-}(CH_2)_7\text{-}CH_3]$.

**6.** Pigment preparations according to one or more of claims 1 to 5, characterized in that the pigment-dispersing agents b) which contain di- or monosulfonic acid and di- or monocarboxylic acid groups and are present therein have been prepared by condensation of perylene-3,4,9,10-tetracarboxylic acid with primary aliphatic or aromatic amines containing sulfonic acid or carboxylic acid groups, of the formula III

$H_2N\text{-}R^4\text{-}Y^-X^+$ (III)

in which $R^4$, $Y^-$ and $X^+$ have the meaning given in claim 1.

**7.** Pigment preparations according to one or more of claims 1 to 6, essentially consisting of

a) 99.5 to 80% by weight of at least one perylene compound of the formula I (base pigment),
b) 0.5 to 15% by weight of at least one perylene compound of the formula II (dispersing agent),
c) 0 to 5% by weight of a nonionic surfactant and
d) 0 to 5% by weight of customary additives,

the amounts of the particular components being based on the total weight of the preparation.

**8.** Process for the preparation of a pigment preparation defined according to one or more of claims 1 to 7, characterized in that the surface structure of the base pigments a) is uniformly coated with one or more pigment-dispersing agents b).

**9.** Process according to claim 8, characterized in that the pigment-dispersing agents b) are added to the reaction medium during the synthesis of the base pigments a).

**10.** Process according to claim 8, characterized in that the pigment-dispersing agents b) are added to the water-moist press-cake of the base pigments a).

**11.** Process according to claim 8, characterized in that the pigment-dispersing agents b), in the case of fine distribution of the dried crude pigments a), are added in the course of dry grinding or wet grinding.

**12.** Process according to claim 8, characterized in that the pigment-dispersing agents b) are added in the course of a solvent finish treatment of base pigments a).

**13.** Process according to claim 8, characterized in that the pigment-dispersing agents b) are mixed in the dry state with pulverulent base pigments a).

**14.** Use of pigment preparations defined according to one or more of claims 1 to 7 as coloring agents for pigmenting high molecular weight organic materials of natural or synthetic origin in the form of plastic compositions, melts, spinning solutions, varnishes, paints or printing inks.

**15.** Use according to claim 14 for pigmenting (coloring) varnish systems of the type of alkyd-melamine resin or acrylic-melamine resin stoving enamels or of the type of two-component varnishes based on acrylic resins which can be crosslinked with polyisocyanate.

**16.** Use according to claim 14 for pigmenting (coloring) printing inks based on nitrocellulose.

**17.** Use according to claim 14 for pigmenting (coloring) moldable plastics.

**Revendications**

**1.** Préparations pigmentaires, caractérisées en ce qu'elles contiennent
a) en tant que pigment de base, au moins un pérylène de formule générale I :

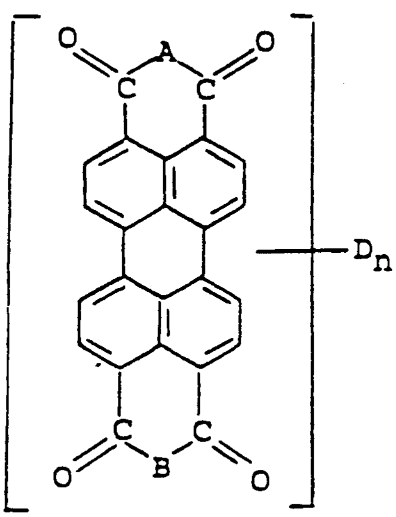

(I)

dans laquelle :
A est un radical bivalent -O- ou >$NR^1$, et
B est un radical bivalent -O- ou >$NR^2$,
D est un atome de chlore ou de brome et, si n est supérieur à 1, éventuellement une combinaison de ces derniers, et
n est un nombre de 0 à 4 ;
où, dans les radicaux A et B ci-dessus :
$R^1$ et $R^2$, indépendamment l'un de l'autre, sont chacun un atome d'hydrogène ou un groupe alkyle en $C_1$-$C_4$ ou encore un groupe phényle, qui peut être non-substitué ou une ou plusieurs fois substitué par des radicaux halogéno, alkyle en $C_1$-$C_4$, alcoxy en $C_1$-$C_4$ ou phénylazo ;
et

b) en tant que dispersant pigmentaire, au moins un pérylène de formule générale II :

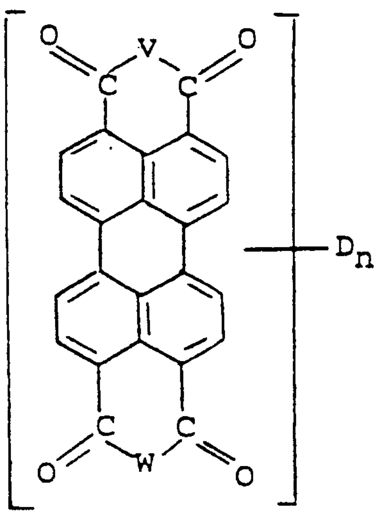

(II)

dans laquelle
V est un radical bivalent -O-, >$NR^3$ ou >$N-R^4-Y^--X^+$ et
W est le radical bivalent >$N-R^4-Y^--X^+$,
D est un atome de chlore ou de brome et, si n est supérieur à 1, une combinaison de ces derniers, et
n est un nombre de 0 à 4 ;
où, dans les radicaux V et W ci-dessus,
$R^3$ est un atome d'hydrogène ou un groupe alkyle en $C_1$-$C_{18}$,ou encore un groupe phényle qui est non-substitué ou peut être substitué une ou plusieurs fois par des radicaux halogéno, alkyle en $C_1$-$C_4$, alcoxy en $C_1$-$C_4$ ou phénylazo,
$R^4$ est un groupe alkylène en $C_1$-$C_{18}$, qui dans la chaîne C-C peut être une ou plusieurs fois interrompu par un chaînon pontant choisi parmi l'ensemble comprenant -O-, -$NR^5$-, -S-, un enchaînement phénylène, -CO-, -$SO_2$- ou -$CR^6R^7$-, ou par une de leurs combinaisons chimiquement possibles, et dans lequel les constituants $R^5$, $R^6$ et $R^7$, indépendamment les uns des autres, sont chacun un atome d'hydrogène ou un groupe alkyle en $C_1$-$C_4$, qui est nonsubstitué ou peut être substitué par un radical hétérocyclique,
ou représente un groupe phénylène, qui est non-substitué ou peut être substitué une ou plusieurs fois par des radicaux alkyle en $C_1$-$C_4$ ou alcoxy en $C_1$-$C_4$, $Y^-$ est l'un des résidus anioniques -$SO_3$- ou -$COO^-$, et $X^+$ est l'ion hydrogène $H^+$, ou l'équivalent $M^{m+}$/m d'un cation métallique choisi dans les cinq premiers groupes principaux, ou parmi le premier, ou le deuxième, ou encore les groupes secondaires compris entre le quatrième et le huitième, du tableau périodique des éléments chimiques, où m est l'un des nombres 1, 2 ou 3 ;
ou encore un ion ammonium $N^+R^8R^9R^{10}R^{11}$ parfaitement défini, où les substituants $R^8$, $R^9$, $R^{10}$ et $R^{11}$ sur l'atome d'azote quaternaire sont, indépendamment les uns des autres, chacun un atome d'hydrogène ou un groupe choisi parmi l'ensemble comprenant les radicaux alkyle en $C_1$-$C_{30}$, alcényle en $C_2$-$C_{30}$, cycloalkyle en $C_5$-$C_{30}$, phényle nonsubstitué ou alkylé en $C_1$-$C_8$, ou encore un groupe poly(alkylène-oxy) -$(CH(R^7)-CH_2-O-)_k$-H, où $R^7$ est un hydrogène ou un radical alkyle en $C_1$-$C_4$, et k est un nombre de 1 à 30, et où les radicaux alkyle, alcényle, cycloalkyle, phényle ou alkylphényle correspondant éventuellement à $R^8$, $R^9$, $R^{10}$ et/ou $R^{11}$, peuvent être substitués par des radicaux amino, hydroxy et/ou carboxy ;
ou encore où les substituants $R^8$ et $R^9$, avec l'atome d'azote quaternaire, peuvent former un système cyclique saturé à 5 à 7 chaînons, qui éventuellement contient encore d'autres hétéroatomes ;
ou encore où les substituants $R^8$, $R^9$ et $R^{10}$, avec l'atome d'azote quaternaire, peuvent former un système cyclique aromatique à 5 à 7 chaînons, qui éventuellement contient encore d'autres hétéroatomes, et sont condensés au noyau éventuellement supplémentaire.

**2.** Préparations pigmentaires selon la revendication 1, caractérisées en ce qu'on a comme pigment de base a) au moins un pérylène ayant la formule générale I qui y est indiquée, dans laquelle :
A est un radical bivalent -O- ou >$NR^1$, et
B est un radical bivalent -O- ou $NR^2$, et
D et n sont tels que définis dans la revendication 1,
du moment que les significations des radicaux A et B ci-dessus sont identiques, et où
$R^1$ et $R^2$ représentent chacun, en coïncidence, un atome d'hydrogène ou un groupe choisi parmi l'ensemble comprenant le radical méthyle ou les structures

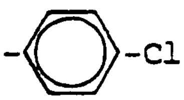 , 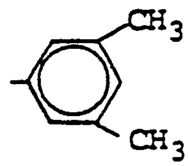 , 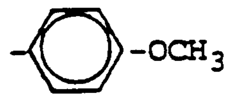 , 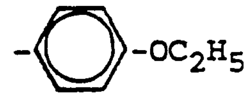

ou 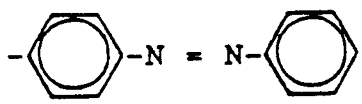

**3.** Préparations pigmentaires selon la revendication 1, caractérisées en ce qu'on a, en tant que dispersant pigmentaire b), au moins un pérylène ayant la formule générale II qui y est indiquée, dans laquelle :
V est un radical bivalent -O-, >$NR^3$ ou >$N$-$R^4$-$Y^-$-$X^+$, et
W est le radical bivalent >$N$-$R^4$-$Y^-$-$X^+$, et
D et n sont tels que définis dans la revendication 1,
où, dans les radicaux V et W ci-dessus,
$R^3$ est un atome d'hydrogène ou un groupe alkyle en $C_1$-$C_4$,ou encore un groupe phényle, qui est non-substitué ou peut être substitué par des substituants chloro, bromo, méthyle, éthyle, méthoxy et/ou éthoxy,
$R^4$ est un groupe alkylène en $C_1$-$C_6$ à chaîne droite ou ramifiée ou un groupe phénylène pouvant être non-substitué, ou substitué par des substituants méthyle, éthyle, méthoxy et/ou éthoxy ;
$Y^-$ est l'un des résidus anioniques -$SO_3^-$ ou -$COO^-$, et
$X^+$ est l'ion hydrogène $H^+$ ou l'équivalent $M^{m+}/m$ d'un cation métallique selon la revendication 1, choisi parmi l'ensemble comprenant les cations $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Cd^{2+}$, $Co^{2+}$, $Zn^{2+}$, $Fe^{2+}$, $Al^{3+}$, $Cr^{3+}$ ou $Fe^{3+}$ ; ou un ion ammonium $N^+R^8R^9R^{10}R^{11}$, dans lequel les substituants $R^8$, $R^9$ et $R^{10}$ sur l'atome d'azote quaternaire sont chacun, indépendamment des autres, un atome d'hydrogène ou un groupe hydroxyalkyle en $C_2$-$C_3$, et $R^{11}$ est l'un des groupes choisis parmi les radicaux alkyle en $C_1$-$C_{30}$ alcényle en $C_2$-$C_{30}$, hydroxyalkyle en $C_2$-$C_3$ ou cycloalkyle en $C_5$-$C_6$.

**4.** Préparations pigmentaires selon la revendication 1 ou 3, caractérisées en ce qu'on utilise comme dispersant pigmentaire b) au moins un pérylène non-halogéné ayant la formule générale II qui y est indiquée, dans laquelle :
V est un radical bivalent -O-, >$NR^3$ ou >$N$-$R^4$-$SO_3^-X^+$, et
W est le radical bivalent >$N$-$R^4$-$SO_3^-X^+$, et
n vaut 0,
où, dans les radicaux V et W ci-dessus,
$R^3$ a les significations données dans la revendication 1,
$R^4$ est un groupe choisi parmi l'éthylène ou le propylène ou les structures suivantes :

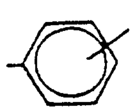 , 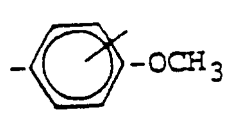 ou 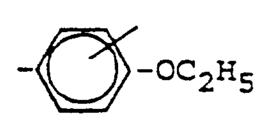

et

chaque $X^+$ est un cation choisi parmi $H^+$, $Ca^{2+}/2$, $N^+H_3[CH_2-(CH_2)_{16}-CH_3]$ ou $N^+H_3[CH_2-(CH_2)_7-CH=CH-(CH_2)_7-CH_3]$

**5.** Préparations pigmentaires selon la revendication 1 ou 3, caractérisées en ce qu'on utilise comme dispersant pigmentaire b) au moins un pérylène non-halogéné ayant la formule générale II indiquée ci-dessus, dans laquelle :
V est un radical bivalent -O-, $>NR^3$ ou $>N-R^4-COO^-X^+$, et
W est le radical bivalent $>N-R^4-COO^-X^+$, et
n vaut 0,
où, dans les radicaux V et W ci-dessus,
$R^3$ a les significations données dans la revendication 1,
$R^4$ est un groupe choisi parmi les radicaux alkylène en $C_1$-$C_6$ ou les radicaux de structure :

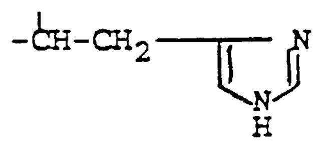

et
chaque $X^+$ est un cation choisi parmi $H^+$, $Ca^{2+}/2$, $N^+H_3[CH_2-(CH_2)_{16}-CH_3]$ ou $N^+H_3[CH_2-(CH_2)_7-CH=CH-(CH_2)_7-CH_3]$

**6.** Préparations pigmentaires selon l'une ou plusieurs des revendications 1 à 5, caractérisées en ce que les dispersants pigmentaires b), contenant des groupes acide di- ou monosulfonique et acide di- ou monocarboxylique, qui y sont présents, ont été préparés par condensation d'acide pérylène-3,4,9,10-tétracarboxylique avec des amines aromatiques ou aliphatiques primaires, contenant des groupes acide sulfonique ou acide carboxylique, de formule III :

$H_2N-R^4-Y^-X^+$ (III)

dans laquelle $R^4$, $Y^-$ et $X^+$ ont les significations données dans la revendication 1.

**7.** Préparations pigmentaires selon l'une ou plusieurs des revendications 1 à 6, constituées essentiellement :
- a) de 99,5 à 80 % en poids d'au moins un pérylène de formule I (pigment de base),
- b) de 0,5 à 15 % en poids d'au moins un pérylène de formule II (dispersant),
- c) de 0 à 5 % en poids d'un tensioactifs non-ionique, et
- d) de 0 à 5 % en poids d'additifs usuels,

les pourcentages des différents constituants étant rapportés au poids total de la préparation.

**8.** Procédé pour fabriquer les préparations pigmentaires définies selon l'une ou plusieurs des revendications 1 à 7, caractérisé en ce que la structure superficielle des pigments de base a) est uniformément recouverte d'un ou plusieurs dispersants pigmentaires b).

**9.** Procédé selon la revendication 8, caractérisé en ce que l'on ajoute les dispersants pigmentaires b) au milieu de réaction pendant la synthèse des pigments de base a).

**10.** Procédé selon la revendication 8, caractérisé en ce qu'on ajoute les dispersants pigmentaires b) au gâteau de compression humide des pigments de base a).

**11.** Procédé selon la revendication 8, caractérisé en ce qu'on ajoute les dispersants pigmentaires b) lors d'une division fine des pigments bruts séchés a), au cours d'un broyage à sec ou par voie humide.

**12.** Procédé selon la revendication 8, caractérisé en ce qu'on ajoute les dispersants pigmentaires b) au cours d'un traitement des pigments de base a) par finition aux solvants.

**13.** Procédé selon la revendication 8, caractérisé en ce que les dispersants pigmentaires b) sont, à l'état sec, mélangés aux pigments de base a) pulvérulents.

**14.** Utilisation des préparations pigmentaires selon l'une ou plusieurs des revendications 1 à 7, comme colorants pour pigmenter des matériaux organiques à grande masse moléculaire, d'origine naturelle ou synthétique, sous forme de masses plastiques, de masses fondues, de solutions de filage, de vernis, de peintures ou d'encres d'imprimerie.

**15.** Utilisation selon la revendication 14, pour pigmenter (colorer) des systèmes de vernis du type des vernis au four à base d'une résine alkyde-mélamine ou acrylique-mélamine, ou du type des vernis à deux composants, à base de résines acryliques réticulables à l'aide d'un polyisocyanate.

**16.** Utilisation selon la revendication 14, pour pigmenter (colorer) des encres d'imprimerie à base de nitrocellulose.

**17.** Utilisation selon la revendication 14, pour pigmenter (colorer) des plastiques déformables.